(19) **Europäisches Patentamt / European Patent Office / Office européen des brevets**

(11) **EP 2 398 671 B1**

(12) # EUROPÄISCHE PATENTSCHRIFT

(45) Veröffentlichungstag und Bekanntmachung des Hinweises auf die Patenterteilung:
**08.07.2015 Patentblatt 2015/28**

(21) Anmeldenummer: **10748056.8**

(22) Anmeldetag: **20.08.2010**

(51) Int Cl.:
**B60N 2/225** *(2006.01)* **F16H 55/08** *(2006.01)*

(86) Internationale Anmeldenummer:
**PCT/EP2010/005103**

(87) Internationale Veröffentlichungsnummer:
**WO 2011/023331 (03.03.2011 Gazette 2011/09)**

(54) **BESCHLAG FÜR EINEN FAHRZEUGSITZ**

FITTING FOR A VEHICLE SEAT

FERRURE POUR SIÈGE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **28.08.2009 DE 102009040453**

(43) Veröffentlichungstag der Anmeldung:
**28.12.2011 Patentblatt 2011/52**

(73) Patentinhaber: **Johnson Controls Components GmbH & Co. KG**
**67657 Kaiserslautern (DE)**

(72) Erfinder:
• **SCHÜLER, Rolf**
**42579 Heiligenhaus (DE)**
• **BOSSMANNS, Bernd**
**40822 Mettmann (DE)**

• **KALMUS, Karsten**
**44799 Bochum (DE)**
• **THIEL, Peter**
**42899 Remscheid (DE)**

(74) Vertreter: **Loock, Jan Pieter et al**
**Kutzenberger Wolff & Partner**
**Theodor-Heuss-Ring 23**
**50668 Köln (DE)**

(56) Entgegenhaltungen:
**EP-A1- 2 068 040     US-A- 2 048 688**
**US-A- 2 447 104**

• **MERRIT H E: "GEARS", 1. Januar 1943 (1943-01-01), 19430101, XP002650579, Seite 59 - Seite 69**

**Beschreibung**

Die Erfindung betrifft einen Beschlag für einen Fahrzeugsitz mit den Merkmalen des Oberbegriffs des Anspruches 1.

Aus der DE 40 34 843 C2 ist ein Beschlag dieser Art bekannt, welcher als Lehneneinsteller dient. Die in Anlage kommenden Zahnflanken von Zahnrad und Zahnkranz sind nach einer Evolventen-Verzahnung ausgebildet.

Weiterhin wird das Dokument EP 2068040 A1 als nächstliegender Stand der Technik betrachtet und beschreibt ein Beschlagentsprechend dem Obebegriff des Anspruchs 1.

Der Erfindung liegt die Aufgabe zu Grunde, einen Beschlag der eingangs genannten Art mit einer alternativen Verzahnung zu schaffen. Diese Aufgabe wird erfindungsgemäß durch einen Beschlag mit den Merkmalen des Anspruches 1 gelöst. Vorteilhafte Ausgestaltungen sind Gegenstand der Unteransprüche.

Dadurch, dass die im Kontaktpunkt aneinander anliegenden Zahnflanken der Zähne von Zahnrad und Zahnkranz dem Verlauf eines Abschnitts einer logarithmischen Spirale folgen, kann die Kontaktkraft im Kontaktpunkt in definierter Richtung und mit definiertem wirksamen Hebelarm näherungsweise gleichmäßig umlaufen. Zahnköpfe und Zahnfüße schließen möglichst sanft an, d.h. stetig und differenzierbar. Der Abschnitt der logarithmischen Spirale kann zu Hinterschneidungen im Bereich der Zahnflanken führen, d.h. in Teilbereichen weisen die Zähne radial weiter innen eine geringere Breite und radial weiter außen eine größere Breite.

Die Verwendung eines Exzenterumlaufgetriebes in einem Beschlag erlaubt eine stufenlose Neigungseinstellung der Lehne eines Fahrzeugsitzes. Die Einsparung eines zentralen Ritzels gegenüber einem Planetenumlaufgetriebe führt zur Entstehung einer Taumelbewegung, die der relativen Drehung der Beschlagteile überlagert ist. Der Exzenter, der beispielsweise aus zwei mittels einer Feder auseinander gespannten Keilsegmenten oder aus einem sichelförmigen Element besteht, ist vorzugsweise auf seiner dem Gleitlager gegenüberliegenden Seite, beispielsweise der Innenseite, an einem Kragen des anderen Beschlagteils gelagert.

Als Alternative zu den bekannten Lösungen, bei denen entweder die geometrischen Grundformen Gerade, Kreisbogen, Cycloide, Trochoide oder für andere Getriebeanwendungen mit anderen Randbedingungen entwickelte und dafür optimierte Flankenformen (Evolvente) eingesetzt und bestmöglich an die realen Bedingungen in einem Getriebebeschlag angepasst werden, ist es mit der erfindungsgemäßen Lösung möglich, die gewünschten Kraftverhältnisse im Getriebe während der Abwälzbewegung vorzugeben, hieraus die in der jeweiligen Situation erforderliche Oberflächenkontur der Zähne zu bestimmen und die Gesamtkontur der Zähne Schritt für Schritt durch Aneinanderreihung der erforderlichen Einzelgeometriestücke zu bilden.

Ein wesentlicher Grund für die in aller Regel nicht idealen und nicht physikalisch exakt korrekten Verhältnisse bei Verwendung von Flankenformen konventioneller Getriebeverzahnungen liegt in den besonderen Anforderungen eines Einstellgetriebes, welches neben der üblichen Aufgabe der Übersetzung eines Drehmomentes zusätzlich die Bedingung zu erfüllen hat, im Ruhezustand in beide Lastrichtungen selbsthemmend und damit sperrend, und gleichzeitig spielfrei zu sein. Bekannte Getriebe und dafür entwickelte Flankenformen verfügen in aller Regel über einen einzigen Kontaktpunkt oder Kontaktbereich zwischen Zahnrad und Zahnkranz. Dieser Wälzbereich liegt fast immer nahe der Verlängerung der Exzentrizität, also der Verbindungslinie der Achsen. Das Erreichen eines im Ruhezustand spielfreien Zustands wird bei den gattungsgemäßen Getriebebeschlägen über eine Änderung des Achsabstandes bewirkt, indem also die Zahnrad und Zahnkranz - meistens über federbelastete Systeme im Exzenter - soweit wie im jeweiligen Zustand möglich aufeinander zu bewegt werden. Im Extremfall liegt bei einer bekannten Verzahnungsauslegung ein einziger Zahn, genau in der Verlängerung der Exzentrizität, mit seinen beiden Flanken an. Dieser Zustand, bei dem die achsreduzierende Kraft und die Kontaktpunkte nahezu auf einer Linie liegen, ist naturgemäß recht instabil und wird deshalb erfindungsgemäß vermieden. Für eine sehr stabile Lage sind die Zähne derart ausgebildet, dass im spielfreien Zustand zwischen den Kontaktpunkten ein Winkel in der Größenordnung eines rechten Winkels entsteht.

Im folgenden ist die Erfindung anhand eines in der Zeichnung dargestellten Ausführungsbeispiels mit Abwandlung näher erläutert. Es zeigen

Fig. 1      einen radialen Schnitt durch Zahnrad und Zahnkranz des Ausführungsbeispiels,

Fig. 2      einen vergrößerten Ausschnitt von Fig. 1,

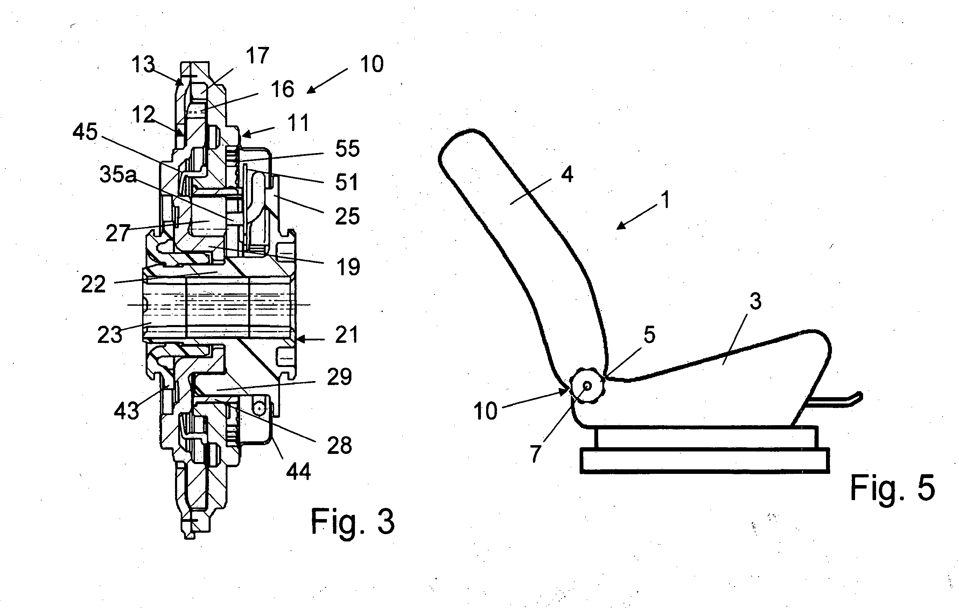

Fig. 3      einen axialen Schnitt durch das Ausführungsbeispiel,

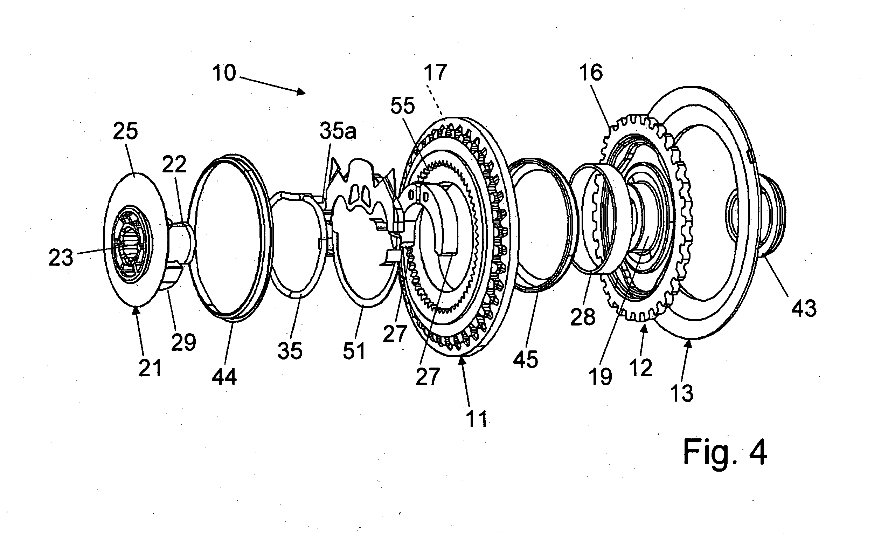

Fig. 4      eine Explosionsdarstellung des Beschlags,

Fig. 5      eine schematische Darstellung eines Fahrzeugsitzes, und

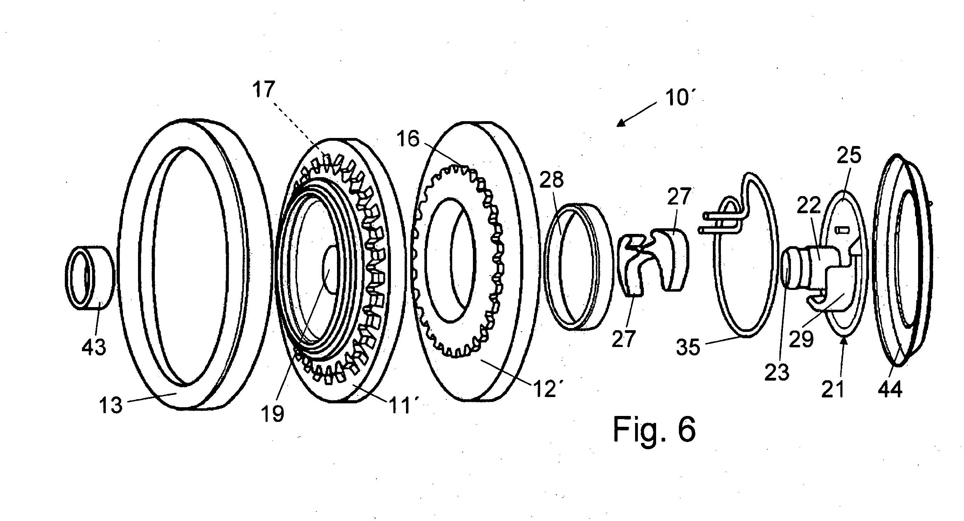

Fig. 6      eine Explosionsdarstellung eines abgewandelten Beschlags.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handrades 5, oder motorisch, beispielsweise mittels eines Elektromotors, eine Antriebswelle 7 gedreht, welche horizontal im Übergangsbereich zwischen Sitzteil 3 und Lehne 4 angeordnet ist. Auf beiden Seiten des Fahrzeugsitzes 1 greift die Antriebswelle 7 drehfest in einen Beschlag 10 ein. Die Antriebswelle 7 definiert die verwendeten Richtungsangaben eines Zylinderkoordinatensystems.

Der Beschlag 10 weist ein erstes Beschlagteil 11 und ein zweites Beschlagteil 12 auf, welche relativ zueinander verdrehbar sind. Die beiden Beschlagteile 11 und 12 lassen jeweils näherungsweise in eine kreisrunde Scheibenform einbeschreiben. Beide Beschlagteile 11 und 12 bestehen vorzugsweise aus Metall, insbesondere Stahl, der wenigstens bereichsweise gehärtet sein kann. Zur Aufnahme der axial wirkenden Kräfte, also zum axialen Zusammenhalt der Beschlagteile 11 und 12, ist ein Umklammerungsring 13 vorgesehen. Ein solcher Zusammenhalt mittels eines Umklammerungsrings ist beispielsweise in der US 6,799,806 B2 beschrieben. Der Umklammerungsring 13 besteht vorzugsweise aus Metall, insbesondere Stahl, der vorzugsweise ungehärtet ist. Der Umklammerungsring 13 weist eine im wesentlichen flache Ringform auf.

Der Umklammerungsring 13 ist (vorliegend in einem äußeren Randabschnitt) fest mit einem der beiden Beschlagteile 11 und 12 verbunden, vorliegend dem ersten Beschlagteil 11, beispielsweise verschweißt oder (in Umfangsrichtung wenigstens teilweise) umgebördelt. Mittels eines radial nach innen weisenden Randabschnitts übergreift der Umklammerungsring 13, gegebenenfalls unter Zwischenlage eines separaten Gleitrings, das relativ zu ihm bewegliche, andere der beiden Beschlagteile 11 und 12 radial außen, ohne die Relativdrehung der beiden Beschlagteile 11 und 12 zu behindern. Zudem werden die einander zugewandten Innenflächen der beiden Beschlagteile 11 und 12 vor dem Eindringen von Fremdkörpern und der Verschmutzung und Beschädigung geschützt.

Der Umklammerungsring 13 und das mit ihm fest verbundene Beschlagteil 11 oder 12 umklammern also das relativ zu ihnen bewegliche, andere der beiden Beschlagteile 11 und 12. In baulicher Hinsicht bilden die beiden Beschlagteile 11 und 12 daher zusammen (mit dem Umklammerungsring 13) eine scheibenförmige Einheit.

Mit der Montage des Beschlags 10 ist das erste Beschlagteil 11 beispielsweise fest mit der Struktur der Lehne 4 verbunden, also lehnenteilfest. Das zweite Beschlagteil 12 ist dann fest mit der Struktur des Sitzteils 3 verbunden, also sitzteilfest. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest. Der Beschlag 10 liegt also im Kraftfluss zwischen Lehne 4 und Sitzteil 3.

Der Beschlag 10 ist als Getriebebeschlag ausgebildet, bei welchem ein erstes Beschlagteil 11 und ein zweites Beschlagteil 12 mittels eines Getriebes zum Verstellen und Feststellen miteinander verbunden sind, genauer gesagt mittels eines - vorliegend selbsthemmenden - Exzenterumlaufgetriebes, wie es beispielsweise in der DE 44 36 101 A1 beschrieben ist, deren diesbezüglicher Offenbarungsgehalt ausdrücklich einbezogen wird.

Zur Ausbildung des Getriebes ist am zweiten Beschlagteil 12 ein außenverzahntes Zahnrad 16 und am ersten Beschlagteil 11 ein innenverzahnter Zahnkranz 17 ausgebildet, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Ein entsprechender Unterschied der Zähneanzahl von Zahnrad 16 und Zahnkranz 17 von wenigstens einem Zahn ermöglicht eine Abwälzbewegung des Zahnkranzes 17 am Zahnrad 16. Die Ausbildung von Zahnrad 16 und Zahnkranz 17 erfolgt vorzugsweise mittels eines einzigen Präge-Stanz-Vorgangs, der zugleich die Beschlagteile 11 und 12 aus ihrem Ausgangsmaterial ausstanzt. Alternativ können die Beschlagteile 11 und 12 - mit ähnlichen Geometrien und gleichen Funktionen - durch Massivumformung (vorzugsweise Kaltfließpressen oder Warmfließpressen) hergestellt werden. Vorliegend bildet das Zahnrad 16 den radial äußeren Rand des zweiten Beschlagteils 12, d.h. das zweite Beschlagteil 12 schließt radial außen mit dem Zahnrad 16 ab.

Eines der beiden Beschlagteile 11 und 12 weist einen Kragen 19 auf, vorliegend das zweite Beschlagteil 12 konzentrisch zum Zahnrad 16. Der Kragen 19 kann als Kragenzug an dem besagten Beschlagteil angeformt (d.h. einstückig ausgebildet) oder als separate Hülse daran befestigt sein. Im Kragen 19 ist ein Mitnehmer 21 mittels einer Nabe 22 drehbar gelagert. Der Mitnehmer 21 besteht vorzugsweise aus Kunststoff. Die Nabe 22 des Mitnehmers 21 ist zentral mit einer Bohrung 23 zur Aufnahme der Antriebswelle 7 versehen. Das Profil der Bohrung 23 ist passend zum Profil der Antriebswelle 7, vorliegend einem Keilwellenprofil, ausgebildet. Im Anschluss an seine Nabe 22 weist der Mitnehmer 21 eine einstückig mit der Nabe 22 ausgebildete Abdeckscheibe 25 mit größerem Durchmesser als die Nabe 22 auf.

Auf dem Kragen 19 sind zwei Keilsegmente 27 - mit ihren gekrümmten Innenflächen - abgestützt, die - mit ihren gekrümmten Außenflächen - das andere der beiden Beschlagteile 11 und 12, vorliegend das erste Beschlagteil 11, lagern. Hierfür ist eine Aufnahme des letztgenannten Beschlagteils mit einer vorzugsweise drehfest eingepressten Gleitlagerbuchse 28 ausgekleidet, an der die Außenflächen der Keilsegmente 27 anliegen. Die Begriffe "abstützen" und "lagern" sollen nicht auf eine bestimmte Richtung des Kraftflusses durch den Beschlag 10 beschränkt sein, da diese Richtung von der Montage des Beschlags 10 abhängt.

Der Mitnehmer 21 weist - radial beabstandet zur Nabe 22 - ein mit Spiel zwischen die Schmalseiten der Keilsegmente 27 fassendes Mitnehmersegment 29 auf, welches mit der Abdeckscheibe 25 und mit der Nabe 22 einstückig ausgebildet ist. Die Keilsegmente 27, deren Breitseiten einander zugekehrt sind, nehmen, beispielsweise mit je einer Öffnung oder einer durch vorspringende Materialpartien definierten Ausnehmung, jeweils einen abgewinkelten Endfinger 35a einer Omega-förmigen Feder 35 auf. Die Feder 35 beaufschlagt die Keilsegmente 27 in Umfangsrichtung, insbesondere um sie auseinander zu drücken, wobei im Betrieb die Breitseiten der Keilsegmente 27 einander berühren und beaufschlagen können.

Der Mitnehmer 21 wird auf der Außenseite des den Kragen 19 aufweisenden Beschlagteils durch einen vorzugsweise aufgeclipsten Sicherungsring 43 axial gesichert. Der Sicherungsrings 43 erstreckt sich in axialer Richtung entlang eines Teiles der Nabe 22, so dass die Nabe 22 nicht direkt an der Innenseite des Kragens 19 anliegt, sondern unter Zwischenlage des Sicherungsrings 43 im Kragen 19 gelagert ist (und dadurch der Mitnehmer 21 am zweiten Beschlagteil 12 gelagert ist). Auf der Außenseite des die Gleitlagerbuchse 28 aufweisenden Beschlagteils (vorliegend des ersten Beschlagteils 11) ist zwischen dessen radial äußerem Rand und der Abdeckscheibe 25 ein Dichtring 44 vorgesehen, beispielsweise aus Gummi oder weichem Kunststoff, der mit der Abdeckscheibe 25 verbunden ist, insbesondere verclipst ist. Der Dichtring 44 kann auch aus Metall ausgebildet und mit dem ersten Beschlagteil 11 fest verbunden, beispielsweise verschweißt, sein, wobei dann die Abdeckscheibe 25 relativ zum Dichtring 44 beweglich ist. Innerhalb des Bauraums zwischen den beiden Beschlagteilen 11 und 12 ist optional ein Trennring 45 als interne Dichtung vorgesehen, welcher beispielsweise aus Kunststoff besteht.

Durch die Keilsegmente 27 (und die Feder 35) wird ein Exzenter definiert, welcher in Verlängerung der Richtung der Exzentrizität das Zahnrad 16 an einer Eingriffsstelle in den Zahnkranz 17 drückt. Bei einem Antrieb durch die sich (mehrfach) drehende Antriebswelle 7 wird ein Drehmoment zunächst auf den Mitnehmer 21 und mittels des Mitnehmersegments 29 dann auf den so definierten Exzenter übertragen, welcher entlang der Gleitlagerbuchse 28 gleitet unter Verlagerung der Richtung der Exzentrizität und damit unter Verlagerung der Eingriffsstelle des Zahnrades 16 im Zahnkranz 17, was sich als taumelnde Abwälzbewegung darstellt, d.h. als Relativdrehung mit überlagerter Taumelbewegung. Die Neigung der Lehne 4 ist dadurch zwischen mehreren Gebrauchsstellungen stufenlos einstellbar.

Zur Verbesserung des dynamischen Betriebsverhaltens ist vorzugsweise noch als Sperrelement eine Sperrfeder 51 vorgesehen, wie sie beispielsweise in der DE 195 48 809 C1 offenbart ist, deren diesbezüglicher Offenbarungsgehalt ausdrücklich einbezogen wird. Die Sperrfeder 51 wirkt vorliegend mit einer Verzahnung 55 zusammen, die als weiterer Zahnkranz am ersten Beschlagteil 11 ausgebildet ist. Die - vorzugsweise auf einem axialen Überstand der Gleitlagerbuchse 28 beweglich gelagerte - Sperrfeder 51 sperrt jeweils die Keilsegmente 27 im nicht-angetriebenen Zustand (indem die Sperrfeder 51 mittels Anlage an die Endfinger 35a die Feder 35 sperrt) und wird durch den angetriebenen Mitnehmer 21 gelöst.

Jeder der Zähne 16a des Zahnrades 16 weist radial innen beidseitig einen Zahnfuß 16b, radial außen einen Zahnkopf 16c und dazwischen beidseitig je eine Zahnflanke 16d auf. Der die Zahnköpfe 16c umschreibende Kopfkreis und der von den Zahnfüßen 16b einbeschriebene Fußkreis sind konzentrisch, vorliegend zu der mit der Gleitlagerbuchse 28 ausgekleideten Aufnahme für den Exzenter, wodurch ein Mittelpunkt $M_{16}$ und eine radiale Richtung (in Zylinderkoordinaten) des Zahnrades 16 definiert sind.

Der Verlauf zweier benachbarter Zahnfüße 16b ergibt sich beispielsweise aus einem an die eine Zahnflanke 16d (stetig und differenzierbar) anschließenden Radius, einem Bogenstück des Fußkreises oder einem geraden, tangential am Fußkreis anliegenden Stück, und einem spiegelsymmetrischen Radius, der an die nächste Zahnflanke 16d anschließt. Die Zahnfüße 16b gehen im Berührpunkt an den Fußkreis ineinander über. Der Verlauf eines Zahnkopfes 16c ergibt sich beispielsweise aus einem an die eine Zahnflanke 16d (stetig und differenzierbar) anschließenden Radius, einem am Kopfkreis anliegenden Stück und einem spiegelsymmetrischen Radius, der an die andere Zahnflanke 16d anschließt. Die Zahnköpfe 16c berühren den Kopfkreis an ihrer radial am weitesten außen gelegenen Stelle.

Entsprechend weist jeder der Zähne 17a des Zahnkranzes 17 einen Zahnfuß 17b, einen Zahnkopf 17c und zwei Zahnflanken 17d auf. Der von den Zahnköpfen 17c einbeschriebene Kopfkreis und der die Zahnfüße 17b umschreibende Fußkreis sind konzentrisch, vorliegend zum Kragen 19, wodurch ein Mittelpunkt $M_{17}$ und eine radiale Richtung (in Zylinderkoordinaten) des Zahnkranzes 17 definiert sind. Die Verläufe der Zahnfüße 17b und der Zahnköpfe 17c entsprechen vorzugsweise denjenigen der Zahnfüße 16b und Zahnköpfe 16c. Das am Fußkreis anliegende Stück kann etwas länger sein als dasjenige am Zahnrad 16. Durch die Bahnkurven der Berandungen der Zahnköpfe 16c des Zahnrades 16 wird während einer kompletten Umdrehung des Zahnrades 16 eine Hüllkurve definiert. Vorzugsweise verläuft der Zahnkopf 17c des Zahnkranzes 17 - wenigstens abschnittsweise - radial äquidistant zu dieser Hüllkurve. Die Zahnfüße 17b benachbarter Zähne 17a gehen am Berührpunkt (ihrer radial am weitesten außen gelegenen Stelle) mit dem Fußkreis ineinander über und definieren so den von ihnen eingeschlossenen Zahngrund. Die Zahnköpfe 17c berühren den Kopfkreis an ihrer radial am weitesten innen gelegenen Stelle. Die Exzentrizität e (des Exzenters) ist die Strecke zwischen dem Mittelpunkt $M_{17}$ des Zahnkranzes 17 und dem Mittelpunkt $M_{16}$ des Zahnrades 16.

Aus der genauen Ausgestaltung der Zähne 16a und 17a ergibt sich, wie die Zähne 16a, 17a in Kontakt kommen können, insbesondere an welchen Kontaktlinien und - flächen Bei der vorliegend vorhandenen Spiralverzahnung gelangen die Zahnflanken 16d und 17d - nacheinander in jeweils einem Kontaktpunkt K - in Anlage, dienen also der Abwälzbewegung, während die Zahnköpfe 16c, 17c und die Zahnfüße 16b, 17b davon unabhängig ausgestaltet werden können. Beim Antrieb des Beschlags 10, also während der Abwälzbewegung, liegt der Kontaktpunkt K nicht genau in Verlängerung der Exzentrizität e, sondern steht - bezüglich des Mittelpunktes $M_{16}$ des Zahnrades 16 - in einem ersten Winkel α von 10° bis 55°, insbesondere 35° bis 50°, über der Verlängerung der Exzentrizität e. Der erste Winkel α hängt von der Form der Keilsegmente 27, insbesondere des Keilwinkels, und deren Position während der Abwälzbewegung ab. Bezüglich der Verlängerung der Exzentrizität e tritt auf der dem Kontaktpunkt K gegenüberliegenden Seite ein weiterer Kontaktpunkt auf, so dass das Zahnrad 16 gleichzeitig an drei Stellen (Exzenter und die beiden Kontaktpunkte) abgestützt ist, also stabilisiert ist.

Im Kontaktpunkt K folgt jede der beiden Zahnflanken 16d und 17d dem Verlauf eines Abschnitts vorzugsweise jeweils einer logarithmischen Spirale. Im folgenden ist dies anhand der logarithmischen Spirale für die Zahnflanke 16d erklärt, wobei entsprechendes für die logarithmische Spirale der Zahnflanke 17d gilt. In einem Sonderfall stimmen beide logarithmischen Spiralen überein.

Bezüglich eines asymptotischen Punktes O verläuft die besagte logarithmische Spirale nach der Formel (in Polarkoordinaten r, φ)

$$r = a\,e^{k\,\varphi}$$

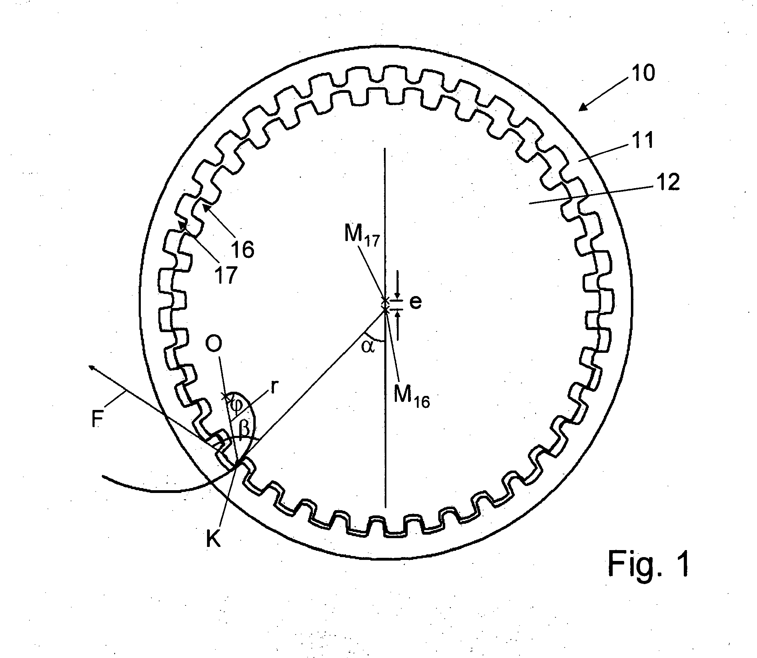

Der asymptotische Punkt O, der beispielsweise innerhalb des Fußkreises des Zahnrades 16 angeordnet sein kann, steht im Allgemeinen, wie in der Fig. 1, dargestellt, - bezüglich des Mittelpunktes $M_{16}$ des Zahnrades 16 - um einen vom ersten Winkel α abweichenden Winkel über der Verlängerung der Exzentrizität e. In Kombination mit den Parametern a, k stehen somit mehrere Wahlmöglichkeiten zur Verfügung.

Die Parameter a, k sind so gewählt, dass die Richtung der Kontaktkraft F im Kontaktpunkt K in eine definierte Richtung zeigt. Diese definierte Richtung steht mit einem zweiten Winkel β zur Verbindungslinie des Mittelpunktes $M_{16}$ des Zahnrades 16 und des Kontaktpunktes K. Der zweite Winkel β ändert sich, wenn der Kontaktpunkt K sich entlang der Zahnflanke 16d bewegt, wobei die Richtung der Kontaktkraft F am letzten Kontaktpunkt der Zahnflanke 16d eines Zahnes 16a der Richtung der Kontaktkraft F am ersten Kontaktpunkt der Zahnflanke 16d des nächsten Zahnes entspricht. Der zweite Winkel β kann beispielsweise zwischen 90° und 120° betragen. Die Änderung des zweiten Winkels β entspricht vorzugsweise dem Teilungswinkel γ des Zahnrades 16, d. h. 2π geteilt durch die Anzahl der Zähne 16a. Der wirksame Hebelarm steht senkrecht zur Richtung der Kontaktkraft F, weicht also von der Verbindungslinie von Mittelpunkts $M_{16}$ und Kontaktpunkt K ab.

Die Parameter a, k können außerdem noch so gewählt werden, dass der asymptotische Punkt O auf der Verbindungsgeraden zwischen dem Mittelpunkt $M_{16}$ des Zahnrades 16 und dem Kontaktpunkt K liegt. Dann wird k = - tan β (das Vorzeichen hängt davon ab, welche der beiden spiegelsymmetrischen Flanke 16d betrachtet wird).

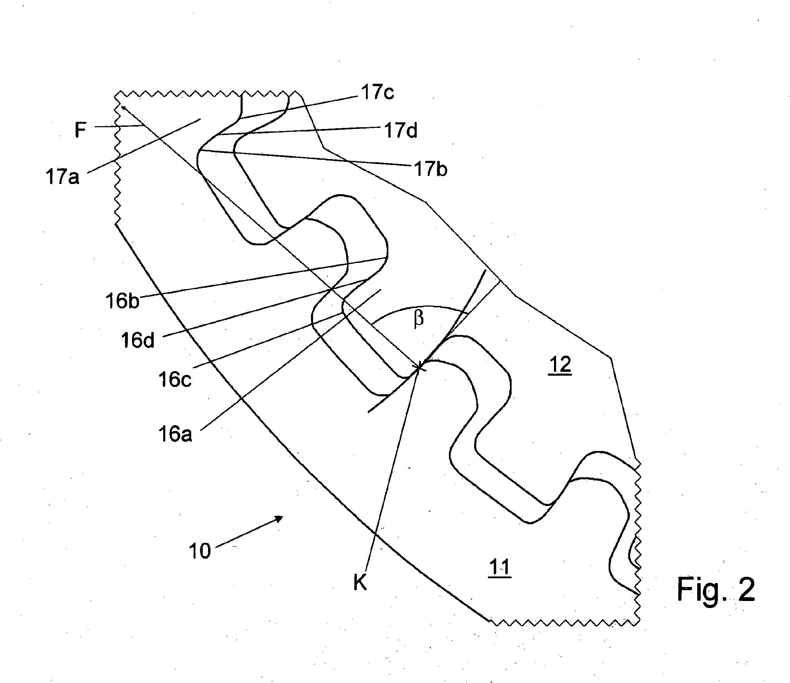

Die Bogenlänge des als Zahnflanke 16d dienenden Abschnitts der logarithmischen Spirale entspricht vorzugsweise dem Teilungswinkel γ des Zahnrades 16 (d.h. 2π geteilt durch die Anzahl der Zähne 16a). Dann läuft der Winkel φ der logarithmischen Spirale beispielsweise in einem Winkelbereich von -γ/2 bis +γ/2, was in Fig. 2 angedeutet ist. Der Kontaktpunkt K in Fig. 2 entspricht dann φ = 0. Die Bogenlänge kann aber auch größer als γ gewählt werden, beispielsweise 2γ.

Die vorgenannten Beziehungen der Parameter a, k und Winkel und Winkelbereich β, γ und φ gelten entsprechend für die logarithmische Spirale der Zahnflanken 17d der Zähne 17a des Zahnkranzes 17.

Je nach Auswahl des Abschnitts der logarithmischen Spirale (d.h. des Winkelbereichs für φ) können an den Zahnflanken 16d des Zahnrades 16 und/oder den Zahnflanken 17d des Zahnkranzes 17 Hinterschneidungen auftreten, so dass (näherungsweise) trapezförmige (schwalbenschwanzförmige) Zähne 16a und/oder 17a entstehen. Solche Formen begünstigen eine eindeutige, sichere Kontaktfindung im Bereich eines größeren ersten Winkels α bei hoher Festigkeit, da bei einem sehr kleinen ersten Winkel α, der sich aufgrund bekannter Flankenformen bildet, unerwünschte Nebenkontakte entstehen würden, die nur durch eine die Festigkeit reduzierende Verringerung der Zahnbreite vermieden werden könnten.

Die erfindungsgemäße Verzahnung kann auch bei einem abgewandelten Beschlag 10' (mit inverser Lagerung des Exzenters) verwendet werden, dessen erstes Beschlagteil 11' den Zahnkranz 17 und den Kragen 19 und dessen zweites Beschlagteil 12' das Zahnrad 16 und die (mit der Gleitlagerbuchse 28 ausgekleidete) Aufnahme für den Exzenter aufweist. Sie kann auch bei einem abgewandelten Beschlag verwendet werden, dessen Beschlagteile radial abstehende Flansche aufweisen, wie er beispielsweise in der DE 44 36 101 A1 oder der DE 199 38 666 A1 beschrieben ist.

**Bezugszeichenliste**

| | |
|---|---|
| 1 | Fahrzeugsitz |
| 3 | Sitzteil |
| 4 | Lehne |
| 5 | Handrad |
| 7 | Antriebswelle |
| 10 | Beschlag |
| 11 | erstes Beschlagteil |
| 12 | zweites Beschlagteil |

| 13 | Umklammerungsring |
| 16 | Zahnrad |
| 16a | Zahn |
| 16b | Zahnfuß |
| 16c | Zahnkopf |
| 16d | Zahnflanke |
| 17 | Zahnkranz |
| 17a | Zahn |
| 17b | Zahnfuß |
| 17c | Zahnkopf |
| 17d | Zahnflanke |
| 19 | Kragen |
| 21 | Mitnehmer |
| 22 | Nabe |
| 23 | Bohrung |
| 25 | Abdeckscheibe |
| 27 | Keilsegment |
| 28 | Gleitlagerbuchse |
| 29 | Mitnehmersegment |
| 35 | Feder |
| 35a | Endfinger |
| 43 | Sicherungsring |
| 44 | Dichtring |
| 45 | Trennring |
| $\alpha$ | erster Winkel |
| $\beta$ | zweiter Winkel |
| e | Exzentrizität |
| F | Kontaktkraft |
| K | Kontaktpunkt |
| $M_{16}$ | Mittelpunkt des Zahnrades |
| $M_{17}$ | Mittelpunkt des Zahnkranzes |
| O | asymptotischer Punkt der logarithmischen Spirale |
| r | Radius der logarithmischen Spirale in Polarkoordinaten |
| $\varphi$ | Winkel der logarithmischen Spirale in Polarkoordinaten |

**Patentansprüche**

1. Beschlag für einen Fahrzeugsitz mit einem ersten Beschlagteil (11), an welchem ein Zahnkranz (17) ausgebildet ist, einem zweiten Beschlagteil (12), an welchem ein Zahnrad (16) ausgebildet ist, welches mit dem Zahnkranz (17) kämmt, wodurch die beiden Beschlagteile (11,12) miteinander in Getriebeverbindung stehen, wobei jeder der Zähne (16a) des Zahnrades (16) radial innen beidseitig einen Zahnfuß (16b), radial außen einen Zahnkopf (16c) und dazwischen beidseitig je eine Zahnflanke (16d) aufweist, die stetig und differenzierbar an den Zahnfuß (16b) und den Zahnkopf (16c) anschließt, und jeder der Zähne (17a) des Zahnkranzes (17) entsprechend einen Zahnfuß (17b), einen Zahnkopf (17c), und zwei Zahnflanken (17d) aufweist, und einem drehbar gelagerten, von einem Mitnehmer (21) angetriebenen, umlaufenden Exzenter (27) zum Antrieb einer relativen Abwälzbewegung von Zahnrad (16) und Zahnkranz (17), wobei während dieser Abwälzbewegung in wenigstens einem Kontaktpunkt (K) eine Zahnflanke (16d) eines Zahnes (16a) des Zahnrades (16) an einer Zahnflanken (17d) eines Zahnes (17a) des Zahnkranzes (17) anliegt, und wobei eine Exzentrizität (e) als Strecke zwischen einem Mittelpunkt ($M_{16}$) des Zahnrades (16) und einem Mittelpunkt ($M_{17}$) des Zahnkranzes (17) definiert ist und der Kontaktpunkt (K) bezüglich des Mittelpunktes ($M_{16}$) des Zahnrads (16) in einem ersten Winkel ($\alpha$) über der Verlängerung der Exzentrizität (e) steht, **dadurch gekennzeichnet, dass** die im Kontaktpunkt (K) aneinander anliegenden Zahnflanken (16d,17d) der Zähne (16a,17a) von Zahnrad (16) und Zahnkranz (17) dem Verlauf eines Abschnitts jeweils einer logarithmische Spirale folgen und der erste Winkel ($\alpha$) 10° bis 55° beträgt, wobei das Zahnrad (16) und der Zahnkranz (17) an zwei Kontaktpunkten (K) gleichzeitig aneinander anliegen.

2. Beschlag nach Anspruch 1, **dadurch gekennzeichnet, dass** die Bogenlänge wenigstens einer Zahnflanke (16d,17d) wenigstens dem Teilungswinkel ($\gamma$) des Zahnrades (16) oder des Zahnkranzes (17) entspricht.

3. Beschlag nach einem der vorhergegangenen Ansprüche, **dadurch gekennzeichnet, dass** bei wenigstens einer der logarithmischen Spirale der asymptotische Punkt (O) auf der Verbindungslinie zwischen dem Kontaktpunkt (K) und dem Mittelpunkt ($M_{16}$,$M_{17}$) des Zahnrades (16) oder des Zahnkranzes (17) liegt.

4. Beschlag nach einem der vorhergehenden Ansprüche, **dadurch gekennzeichnet, dass** die Zähne (16a,17a) von Zahnrad (16) und Zahnkranz (17) in einem Bereich der Zahnflanken (16d, 17d) radial weiter außen eine größere Breite als radial weiter innen aufweisen.

5. Beschlag nach Anspruch 4 **dadurch gekennzeichnet, dass** die Zähne (16a,17a) von Zahnrad (16) und/oder Zahnkranz (17) näherungsweise trapezförmig sind.

6. Beschlag nach einem der vorhergegangenen Ansprüche, **dadurch gekennzeichnet, dass** bei den im Kontaktpunkt (K) aneinander anliegenden Zähnen (16a,17a) von Zahnrad (16) und Zahnkranz (17) der Zahnkopf (17c) des Zahnes (17) des Zahnkranzes (17) - wenigstens abschnittsweise äquidistant zu einer Hüllkurve verläuft, die durch die Bahnkurve der Berandungen der Zahnköpfe (16c) des Zahnrades (16) während einer kompletten Umdrehung des Zahnrades (16) definiert wird.

## Claims

1. Fitting for a vehicle seat, with a first fitting part (11) on which a toothed ring (17) is formed, a second fitting part (12) on which a gear wheel (16) which meshes with the toothed ring (17) is formed, as a result of which the two fitting parts (11, 12) are in geared connection with each other, wherein each of the teeth (16a) of the gear wheel (16) has a tooth base (16b), radially on the inside on both sides, a tooth tip (16c) radially on the outside and, in between on both sides, a respective tooth flank (16d) which continuously and differentiably adjoins the tooth base (16b) and the tooth tip (16c), and each of the teeth (17a) of the toothed ring (17) correspondingly has a tooth base (17b), a tooth tip (17c) and two tooth flanks (17d), and a rotatably mounted, encircling excentic (27), which is driven by a driver (21), for driving a relative rolling movement of gear wheel (16) and toothed ring (17), wherein, during this rolling movement, a tooth flank (16d) of a tooth (16a) of the gear wheel (16) bears against a tooth flank (17d) of a tooth (17a) of the toothed ring (17) at least one contact point (K), and wherein an excentricity (e) is defined as a distance between a centre point ($M_{16}$) of the gear wheel (16) and a centre point ($M_{17}$) of the toothed ring (17), and the contact point (K) with respect to the centre point ($M_{16}$) of the gear wheel (16) is at a first angle ($\alpha$) via the extension of the excentricity (e), **characterized in that** the tooth flanks (16d, 17d) of the teeth (16a, 17a) of gear wheel (16) and toothed ring (17), which tooth flanks bear against each other at the contact point (K), follow the profile of a section of a respective logarithmic spiral, and the first angle ($\alpha$) is 10° to 55°, wherein the gear wheel (16) and the toothed ring (17) bear against each other simultaneously at two contact points (K).

2. Fitting according to Claim 1, **characterized in that** the arc length of at least one toothed flank (16d, 17d) corresponds at least to the angular pitch ($\gamma$) of the gear wheel (16) or of the toothed ring (17).

3. Fitting according to either of the preceding claims, **characterized in that**, in at least one of the logarithmic spirals, the asymptotic point (O) lies on the connecting line between the contact point (K) and the centre point ($M_{16}$, $M_{17}$) of the gear wheel (16) or of the toothed ring (17).

4. Fitting according to one of the preceding claims, **characterized in that** the teeth (16a, 17a) of gear wheel (16) and toothed ring (17) have a greater width in a region of the tooth flanks (16d, 17d) radially further on the outside than radially further on the inside.

5. Fitting according to Claim 4, **characterized in that** the teeth (16a, 17a) of gear wheel (16) and/or toothed ring (17) are approximately trapezoidal.

6. Fitting according to one of the preceding claims, **characterized in that**, with the teeth (16a, 17a) of gear wheel (16) and toothed ring (17) bearing against each other at the contact point (K), the tooth tip (17c) of the tooth (17a) of the toothed ring (17) runs at least partially equidistantly from an envelope which is defined by the curve of the path of the boundaries of the tooth tips (16c) of the gear wheel (16) during one complete revolution of the gear wheel (16).

## Revendications

1. Ferrure pour un siège de véhicule, comprenant une première partie de ferrure (11) sur laquelle est réalisée une couronne dentée (17), une deuxième partie de ferrure (12) sur laquelle est réalisée une roue dentée (16) qui s'engrène avec la couronne dentée (17), de sorte que les deux parties de ferrure (11, 12) soient en liaison de transmission l'une avec l'autre, chacune des dents (16a) de la roue dentée (16) présentant radialement à l'intérieur des deux côtés une base de dent (16b), radialement à l'extérieur une tête de dent (16c) et entre celles-ci des deux côtés à chaque fois un flanc de dent (16d), qui se raccorde de manière continue et différenciable à la base de dent (16b) et à la tête de dent (16c), et chacune des dents (17a) de la couronne dentée (17) présentant de manière correspondante une base de dent (17b), une tête de dent (17c) et deux flancs de dent (17d), et un excentrique en rotation (27) supporté de manière rotative, entraîné par un dispositif d'entraînement (21) pour l'entraînement d'un mouvement de roulement relatif de la roue dentée (16) et de la couronne dentée (17), un flanc de dent (16d) d'une dent (16a) de la roue dentée (16), pendant ce mouvement de roulement, s'appliquant à au moins un point de contact (K) contre un flanc de dent (17d) d'une dent (17a) de la couronne dentée (17), et une excentricité (e) étant définie en tant que section entre un centre ($M_{16}$) de la roue dentée (16) et un centre ($M_{17}$) de la couronne dentée (17) et le point de contact (K) étant situé par rapport au centre ($M_{16}$) de la roue dentée (16) à un premier angle ($\alpha$) au-dessus du prolongement de l'excentricité (e), **caractérisée en ce que** les flancs de dent (16d, 17d) des dents (16a, 17a) de la roue dentée (16) et de la couronne dentée (17) s'appliquant les uns contre les autres au point de contact (K) suivent l'allure d'une portion d'une spirale logarithmique respective et le premier angle ($\alpha$) vaut 10° à 55°, la roue dentée (16) et la couronne dentée (17) s'appliquant simultanément l'une contre l'autre au niveau de deux points de contact (K).

2. Ferrure selon la revendication 1, **caractérisée en ce que** la longueur de l'arc d'au moins un flanc de dent (16d, 17d) correspond au moins à l'angle de pas (γ) de la roue dentée (16) ou de la couronne dentée (17).

3. Ferrure selon l'une quelconque des revendications précédentes, **caractérisée en ce que** dans le cas d'au moins une des spirales logarithmiques, le point asymptotique (O) se situe sur la ligne de liaison entre le point de contact (K) et le centre ($M_{16}$, $M_{17}$) de la roue dentée (16) ou de la couronne dentée (17).

4. Ferrure selon l'une quelconque des revendications précédentes, **caractérisée en ce que** les dents (16a, 17a) de la roue dentée (16) et de la couronne dentée (17) présentent, dans une région des flancs de dent (16d, 17d) radialement plus à l'extérieur, une plus grande largeur que dans une région radialement plus à l'intérieur.

5. Ferrure selon la revendication 4, **caractérisée en ce que** les dents (16a, 17a) de la roue dentée (16) et/ou de la couronne dentée (17) sont approximativement trapézoïdales.

6. Ferrure selon l'une quelconque des revendications précédentes, **caractérisée en ce que** dans le cas des dents (16a, 17a) de la roue dentée (16) et de la couronne dentée (17) s'appliquant les unes contre les autres au point de contact (K), la tête de dent (17c) de la dent (17a) de la couronne dentée (17) s'étend au moins en partie de manière équidistante par rapport à une courbe d'enveloppe qui est définie par la courbe de trajectoire des bords des têtes de dent (16c) de la roue dentée (16) pendant une rotation complète de la roue dentée (16).

EP 2 398 671 B1

Fig. 1

Fig. 2

Fig. 4

Fig. 5

Fig. 3

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4034843 C2
- EP 2068040 A1
- US 6799806 B2
- DE 4436101 A1
- DE 19548809 C1
- DE 19938666 A1